# FASCICULE DE BREVET EUROPEEN

(11) **EP 0 459 917 B1**
(45) Date de publication et mention de la délivrance du brevet: **06.04.1994**
(21) Numéro de dépôt: 91420154.6
(22) Date de dépôt: 14.05.1991
(51) Int. Cl.: F16D 69/04, F16D 69/02, B22F 7/08

(54) **Procédé de fabrication d'une garniture de frein à plots gainés non jointifs, et garniture obtenue**
Herstellungsverfahren eines Bremsbelages aus nichtverbundenen ummantelten Kernen und derart hergestellter Belag
Method of manufacturing a brake lining comprising non-jointed sleeves cores and lining obtained thereby

(30) Priorité: 18.05.1990 FR 9006602
(43) Date de publication de la demande: 04.12.1991
(73) Titulaire: LE CARBONE LORRAINE, 92400 Courbevoie (FR)
(72) Inventeur: Youssef, Hassan, F-95150 Taverny (FR); Bigay, Yves, F-78000 Versailles (FR)
(74) Mandataire: Séraphin, Léon

(56) Documents cités:
- EP-A- 0 026 578
- WO-A-83/02651
- WO-A-87/06315
- FR-A- 1 259 664
- FR-A- 2 350 512

## Description

L'invention concerne un procédé de fabrication d'une garniture de frein à base de bronze ou de fer, comprenant plusieurs plots fixés sur un support ou tôle métallique. Elle concerne aussi la garniture obtenue.

Les garnitures connues par les livraisons de la demanderesse comprennent des plots distincts fixés sur leur support métallique, chaque plot comportant une enveloppe cylindrique de produit métallique fritté moins fragile, destiné à protéger le produit de friction en évitant ses ébréchures. La fixation des plots à la semelle métallique est individuelle, par exemple par une soudure reliant; le pied du plot; au support ou semelle ou à l'aide d'une embase métallique intermédiaire. Dans le cas où les plots sont cylindriques circulaires, ils sont parfois irréguliers en diamètre et en hauteur par suite notamment du procédé de fabrication individuelle de chaque plot.

Il en est de même dans le brevet français n°1.259.664 qui décrit un élément de friction pour freins dans lequel on forme des plots gainés par mise en forme séparée de plots et de leur gaine à partir de poudre, assemblage puis agglomération en une seule opération, puis on les fixe à un support métallique par soudage ou brasage.

La demanderesse a cherche à mettre au point un procédé de fabrication plus simple et plus économique, évitant les inconvénients précédents et améliorant si possible la qualité de la fixation des plots sur la semelle.

### EXPOSE DE L'INVENTION

L'invention a pour premier objet un procédé de fabrication d'une garniture de frein dans lequel on fixe plusieurs plots en produits de friction frittés, gainés chacun par une ceinture annulaire métallique frittée, sur un support métallique, lesdits plots gainés étant non jointifs. Selon l'invention, il comprend les étapes suivantes :
(a) on prépare une face d'accrochage dudit support métallique au moyen des opérations successives suivantes :
   - on dégraisse et/ou on sable une face de ladite semelle, et on la revêt d'une suspension de poudre de soudobrasure dans un liquide organique ;
   - on élimine toute trace de carbone de ce revêtement, par oxydation à chaud dudit revêtement ;
   - on réduit les oxydes alors formés en traitant thermiquement le support ainsi revêtu en atmosphère réductrice, la face revêtue devenant alors ladite face d'accrochage ;
(b) on moule d'une part des poudres de produits de friction et on les compacte sous forme de plots ébauches, et on moule d'autre part des poudres métalliques et on les compacte sous forme de ceintures annulaires ébauches de diamètre intérieur égal à 1,005 fois à 1,050 fois le diamètre extérieur desdits plots ébauches ;
(c) on dispose lesdites ceintures annulaires ébauches autour desdits plots ébauches et on les fritte, obtenant des plots ébauches gainés ;
(d) on dispose ou on a disposé lesdits plots ébauches gainés sur ladite face d'accrochage dudit support métallique, et on les soude par brasure-diffusion à ce support par traitement thermique ;
(e) on forge simultanément, à plus de 400° C, lesdits plots ébauches gainés en réduisant leurs hauteurs d'au moins 15 %, obtenant ainsi ladite garniture de frein.

Le procédé de revêtement de soudobrasure de la face du support métallique a un très grand intérêt non seulement parce qu'il servira à souder les plots au support mais aussi parce que il créé une surface d'accrochage permettant de manipuler les ébauches de plots posées sur cette surface sans qu'elles glissent même pour des inclinaisons dépassant 10°. Les plots fabriqués, ici des plots gainés, ont typiquement un rapport. hauteur/diamètre inférieur à 2. Ainsi, et selon l'organisation de la fabrication, on disposera les plots ébauches sur le support au plus tard en (d) pour le soudage, ou bien en (c) pour le frittage et le soudage simultanément, ou mieux encore au départ en (b) pour le moulage et le compactage des poudres de friction directement sur le support permettent alors un accrochage amélioré, grâce au travail de compression sur sa surface.

Les conditions préférentielles des traitements thermiques d'élimination du carbone et de réduction de ce procédé de revêtement de soudo-brasure donnant en même temps une surface d'accrochage sont les suivantes : l'élimination de carbone est typiquement faite entre 300 et 550° C, et la réduction, sous atmosphère réductrice par exemple (N₂ + H₂), est typiquement faite entre 600 et 1000° C, entraînant une liaison par diffusion des grains de poudre de soudobrasure au support métallique.

La face du support ainsi traitée a une bonne adhérence et est prête au soudage à ce support des grains des poudres de produits de friction des plots et des poudres métalliques de leurs ceintures annulaires, selon l'étape (d).

Le procédé de l'invention permet ainsi dans toutes ses variantes d'obtenir une soudure continue de chaque plot gainé avec le support métallique.

Alors que dans la fabrication de ce type de garniture de frein, un positionnement de chaque plot gainé par déformation sous compression du plot ébauche dans un creux ou trou du support non traitée ne permet pas d'assurer un bon accrochage sur ce support, la situation est totalement modifiée par le revêtement de soudo-brasure de l'invention. Dans le cas de l'invention, un téton par exemple tronconique avec creux correspondant de la face d'accrochage de la semelle améliore encore l'adhérence du plot ébauche au support métallique. Un tel téton a typiquement au niveau de la face d'extrémité inférieure ou pied du plot gainé un rayon égal à 5 à 30 % du rayon du plot gainé. Chaque creux du support, de préférence débouchant, étant traité à la soudobrasure, l'encastrement du téton produit le positionnement et. l'accrochage dans ce creux même si le plot ébauche a été moulé et compacté en dehors du support. L'effet. d'accrochage dans le creux du support, est particulièrement important lorsque le compactage du plot ébauche est effectué directement sur la face d'accrochage du support, on a constaté que alors les ébauches de plots ne glissaient pas par rapport au support pour des inclinaisons de ce support dépassant 20°.

Pour améliorer la résistance de la liaison soudée des plots ébauches gainés et du support, liaison obtenue par le traitement thermique de l'étape (d), il est recommandé d'ajouter à l'interface plots/support ou pied une sous-couche de poudre de bronze introduite au moulage des poudres formant le plot et de préférence aussi au moulage des poudres formant la ceinture annulaire (opération (b)).

Cette sous-couche de poudre de bronze a de préférence une épaisseur comprise entre 0,2 et 2 mm, un supplément d'épaisseur n'entraînant pas d'amélioration sensible de la résistance de ladite liaison soudée et diminuant la hauteur des produits de friction. L'épaisseur de cette sous-couche devient, après les compressions successives de l'ébauche de plot gainé, typiquement 0,1 à 1,3 mm.

La demanderesse a constaté que la fabrication d'un plot gainé avec application de la ceinture ébauche sur le plot ébauche conduisait à des problèmes d'éclatement de la ceinture, par suite du gonflement différentiel du plot et de sa ceinture au frittage. De façon nouvelle, on réalise séparément les ceintures annulaires ébauches et on choisit le diamètre intérieur de chaque ceinture annulaire ou bague ébauche de façon que le diamètre du plot après frittage soit compris entre le diamètre intérieur de la bague et ce diamètre augmenté de environ 1 %, obtenant ainsi une bonne liaison entre plot et ceinture sans risque d'éclatement et sans gonflement apparent du plot gainé. Le produit métallique des ceintures gonfle pas ou peu, et le principe précédent se traduit par la règle pratique selon laquelle le diamètre intérieur des ceintures annulaires ébauches fabriquées séparément doit être égal à 1,005 fois à 1,05 fois, et le plus souvent 1,005 fois à 1,025 fois, le diamètre extérieur des plots ébauches, le choix du jeu exact tenant compte de la nature des matériaux en présence.

Il peut être préféré de faire un premier frittage des ceintures annulaires ébauches, pour améliorer leur cohésion et obtenir des plots gainés d'une régularité dimensionnelle encore améliorée.

Dans le cas où les poudres de produits de friction et les poudres métalliques contiennent du bronze, lesdites poudres de produits de friction contenant des poudres de graphite et de produits abrasifs et des fondants tels que du plomb ou du verre liés par du bronze, et lesdites poudres métalliques contenant du bronze, de la fonte et 0,4 à 10 % de graphite, on effectue le ou les traitements thermiques de frittage sous atmosphère réductrice et typiquement entre 700 et 900° C, et le traitement de soudage de l'étape (d) typiquement entre 750 et 1000° C. Lorsque dans l'étape (b) on moule et on compacte les plots ébauches directement sur la face d'accrochage du support métallique, les ceintures annulaires ébauches sont disposées en (c) autour desdits plots ébauches et reposent alors par leur extrémité inférieure sur ledit support, et on effectue en même temps le frittage et le soudage de ces plots ébauches munis de leurs ceintures au moyen d'un traitement thermique de 10 à 40 min entre 750 et 1000° C sous atmosphère réductrice.

Dans le cas où les poudres de produits de friction et les poudres métalliques contiennent du fer, lesdites poudres de produits de friction contenant des poudres de graphite et de produits abrasifs et des fondants tels que du plomb ou du verre liés par du fer, et lesdites poudres métalliques contenant du fer, de la fonte et 0,4 à 10 % de graphite, on effectue le ou les traitements thermiques de frittage sous atmosphère réductrice et typiquement entre 850 et 1100° C, et le traitement de soudage de l'étape (d) typiquement entre 900 et 1150° C. Lorsque les plots ébauches sont moulés et compactés directement sur la face d'accrochage du support métallique, on préfère comme précédemment effectuer en même temps le frittage et le soudage desdits plots ébauches munis de leurs ceintures annulaires ébauches, par un traitement thermique entre 900 et 1150° C sous atmosphère réductrice.

Le forgeage à chaud de l'étape (e) augmente la compacité des pots ébauches gainés par déformation et imbrication de leurs grains. La hauteur des plots ébauches gainés est réduite d'au moins 15 %, de préférence de 25 à 35 %. La résistance en service ou durée de vie des plots est augmentée. Le forgeage à chaud est effectué entre 400 et 950° C dans le cas des plots à base de bronze, entre 600 et 1050° C dans le cas des plots à base de fer. Le forgeage est effectué avec un jeu réduit des outillages par rapport aux plots gainés grâce à la régularité de leur diamètre après frittage, régularité maintenue après soudage.

Une amélioration considérable de la liaison entre les grains frittés et forgés est encore possible, et très recommandée, grâce à un traitement de compression isostatique, dans lequel la garniture traitée est plongée dans un lit fluide de particules réfractaires lui-même placé dans un conteneur étanche déformable à chaud fermé sous vide, ce conteneur étant soumis à une pression d'au moins 5 MPa et à une température d'au moins 650° C.

Dans le cas des "base bronze", ces conditions de pression et de température sont de préférence comprises entre 5 et 25 MPa et entre 700 et 950° C. Dans le cas des "base fer", on utilise des températures plus élevées, 850 à 1050° C, avec des pressions semblables.

Le traitement de compression isostatique, qui augmente encore la compacité et généralise les liaisons métallurgiques entre grains, multiplie la durée de vie des garnitures de freins de l'invention par 1,2 à 3.

L'invention a encore comme objet la garniture de frein obtenue. Cette garniture comprend comme il est connu plusieurs plots en produits de friction gainés chacun par une ceinture annulaire métallique frittée habituellement moins fragile, ces plots gainés étant non jointifs et fixés par leurs pieds ou extrémités inférieures respectives à un support métallique. Selon l'invention, chaque plot gainé est lié à ce support par la surface de son pied selon une liaison métallique continue, à la différence des plots de l'art antérieur fixés par soudure formant un bourrelet ou par un moyen de fixation du type rivet. Les plots de l'invention se reconnaissent en outre par leur régularité géométrique et plus particulièrement par la régularité de leur fût. Ils comportent souvent à leur pied une sous-couche inférieure de bronze fritté d'épaisseur 0,1 à 1,3 mm, ayant une excellente liaison aussi bien avec le support métallique qu'avec la portion de plot gainé qui le surmonte et la prolonge.

Une garniture de frein selon l'invention se distingue encore de préférence par la présence, à la base de chacun de ses plots gainés, d'un téton encastré dans un creux du support, la liaison métallique de la base annulaire plane du plot gainé avec ledit support se poursuivant au moins sur toute la surface latérale du téton et du creux. Cette continuation de la liaison est obtenue en particulier lorsque le creux, par exemple tronconique, est emboîté par un téton de même angle de cône, ou lorsque le plot ébauche a été compacté directement sur le support métallique.

### AVANTAGES DE L'INVENTION

- La disposition des plots gainés sur le support métallique de la garniture de frein peut être fixée avec précision dès le moulage et le compactage des plots ou au plus tard avant le soudage de ces plots au support par traitement thermique. La surface d'accrochage du support métallique permet les transports du support chargés des plots ébauches, ceinturés ou non de leur ébauche de gaine, d'un poste de travail à un autre ou dans un four sans que les plots ébauches glissent ;
- Les plots gainés obtenus, typiquement cylindriques circulaires, ont une géométrie régulière et une excellente santé, sans gonflement local et: sans fissure.Le forgeage en série est facilité ;
- La fabrication de la garniture de frein est grandement facilitée, particulièrement dans le cas où on moule et compacte les plots ébauches directement sur le support métallique, et dans tous les cas par l'absence de glissement des ébauches sur le support pendant les transports ou manipulations ; il n'y a pas besoin d'outillage de maintien des plots sur la semelle pour le soudage ;
- Il n'y a plus besoin de soudure de fixation du plot gainé, ni d'une autre opération de fixation, le traitement thermique de soudage ne mettant en oeuvre que la soudobrasure initialement déposée sur la semelle métallique ;
- La durée de vie en service de la garniture de frein est de préférence augmentée, typiquement de 30 à 100 %, par l'ajout d'un traitement de compression isostatique à chaud.

### EXEMPLES

La figure 1 représente une garniture de frein selon l'invention, en coupe axiale de plusieurs plots gainés.

La figure 2 représente le moulage et le compactage de plots ébauches sur un support métallique, en coupe axiale.

La figure 3 représente un autre plot ébauche disposé sur un autre support métallique et entouré par une ceinture annulaire ébauche, avant frittage et soudage, en coupe axiale.

La figure 4 représente le même plot après forgeage à chaud, également en coupe axiale.

Les figures 5a à 5c schématisent l'effet des traitements successifs sur les liaisons métallurgiques entre les grains de poudre.

La figure 6 représente des garnitures de freins selon l'invention dans un conteneur de compression isostatique à chaud, en coupe partielle.

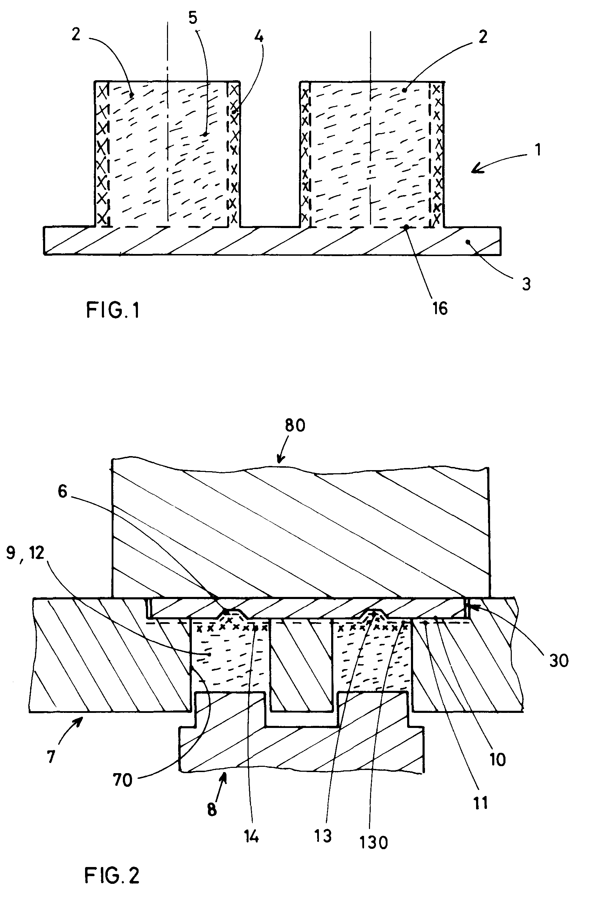

La figure 1 représente une coupe d'une garniture de frein ferroviaire 1 à 9 plots gainés 2, appelée habituellement "demi-garniture" car le système de freinage comporte deux garnitures symétriques. Le support 3 est en acier, la liaison 16 entre les plots gainés 2 et ce support 3 est métallique, sans oxydes, et continue.

Le pourtour des plots 2 est parfaitement régulier, mais l'examen en coupe axiale montre que les ceintures métalliques annulaires 4 gainent chacune un plot 5 en produits de friction gonflé à mi-hauteur d'environ 1,5 % sur le diamètre. Les ceintures 4 n'ont pas été endommagées grâce à leur jeu préalable de 1 % par rapport au diamètre des ébauches des plots 5 non encore frittés.

Sur la figure 2, on voit le moulage ou mise en forme et le compactage de plots ébauches 12 centrés chacun sur un creux 6 de la semelle métallique 30, au moyen d'un outillage 7 comprenant des cavités cylindriques de moulage 70, d'un poinçon inférieur 8 de compression de la poudre, et d'un poinçon supérieur 80 qui maintient l'outillage 7 et la semelle ou support 30 lorsque ledit poinçon de compression 8 remonte. On a fini cette opération en introduisant une couche 14 d'épaisseur 1 mm de poudre de bronze dans les cavités de moulage 70, cette poudre 14 assurant l'obtention d'une liaison soudée très résistante par le traitement thermique de soudage. La face 10 du support 30 tournée vers la poudre 9 avait été revêtue de soudo-brasure selon l'invention, elle est ainsi devenue une face d'accrochage 10, et le compactage des plots ébauches 12 directement sur cette face 10 ainsi que l'obtention de tétons 13 dépassant du pied 130 de chaque plot 12 améliorent encore fortement l'effet d'accrochage desdits plots 12 sur le support 30.

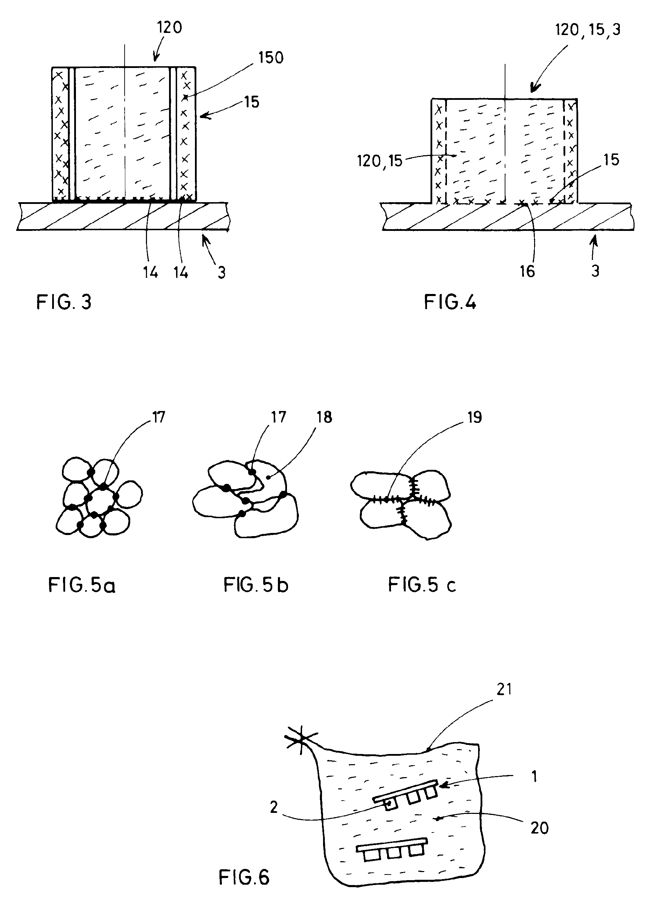

La figure 3 montre un plot ébauche 120 de diamètre 31 mm placé sur un support métallique 3 et entouré d'une ceinture métallique ébauche 15 de diamètre intérieur 31,5 mm montée et compactée à part à partir de poudres métalliques 150. Ces ébauches comportent l'une et l'autre une sous-couche 14 de poudre de bronze. L'ensemble 120 et 15 et 3 est prêt pour le frittage et le soudage.

On a représenté sur la figure 4 cet ensemble (120, 15, 3), dont le plot 120 et la ceinture 15 sont à base de bronze, après : un traitement thermique de frittage et soudage, en une opération, de 20 min à 920° C sous atmosphère réductrice, et après un forgeage à 750° C avec réduction de la hauteur du plot gainé ébauche 120 et 15 de 28 %. Le plot gainé obtenu 120 et 15 a une liaison métallique 16 continue avec le support 3, grâce au revêtement de soudobrasure de ce support 3 (tel que 11 sur la figure 2) et avec le renforcement lié à la sous-couche de bronze 15.

Les figures 5a à 5c expliquent l'intérêt du forgeage à chaud et celui de la compression isostatique à chaud. Les grains de poudre compactés et frittés (figure 5a) ont des liaisons métallurgiques limitées à leurs points de contact 17, le compactage initial à froid n'ayant pas déformé les grains. Sur la figure 5b, après forgeage à chaud, on voit qu'il y a eu densification avec déformation des grains 18 et des imbrications entre grains ; la compacité et la résistance sont globalement améliorées, mais les liaisons métallurgiques 17 ne sont habituellement pas développées. Sur la figure 5c, après compression isostatique à chaud, les grains ont été déformés et appliqués les uns contre les autres selon des surfaces importantes, permettant le développement de liaisons métallurgiques 19 du type "généralisées". On comprend qu'il y ait une forte augmentation de la résistance et de la durée de vie en service des garnitures de freins traitées en compression isostatique selon l'invention.

La figure 6 montre des garnitures de freins 1 noyées dans un lit de fines particules réfractaires 20 placées dans un conteneur étanche 21 en acier fermé sous vide. Les garnitures 1 sont à base de fer, et on les traite ici en compression isostatique en soumettant le conteneur 21 ainsi rempli à une pression de 10 MPa et une température de 1020° C. Après refroidissement et extraction des ébauches, on obtient pour les plots gainés 2 de ces garnitures 1 la modification de la figure 5c, et une amélioration surprenante de la résistance en service.

### APPLICATION

La garniture de frein de l'invention est typiquement utilisée pour le freinage de véhicules ferroviaires ou automobiles, freinage agissant sur disques, flasques ou bandage de leurs roues, et pour le freinage d'avions ou hélicoptères et de machines industrielles.

## Revendications

1. Procédé de fabrication d'une garniture de frein (1; 120 et 15 et 3) dans lequel on fixe plusieurs plots (2; 120 et 15) en produits de friction frittés, gainés chacun par une ceinture annulaire métallique frittée (4; 15), sur une semelle métallique rigide (3,30), lesdits plots gainés (2; 120 et 15) étant non jointifs, comprenant les étapes suivantes :
(a) on prépare une face d'accrochage (10) dudit support métallique (30) au moyen des opérations successives suivantes :
- on dégraisse et/ou on sable une face (10) dudit support (30), et on la revêt d'une suspension (11) de poudre de soudobrasure dans un liquide organique ;
- on élimine toute trace de carbone de ce revêtement (11), par oxydation à chaud dudit revêtement ;
- on réduit les oxydes alors formés en traitant thermiquement le support ainsi revêtu en atmosphère réductrice, la face revêtue (10) devenant alors ladite face d'accrochage (10) ;
(b) on moule d'une part des poudres de produits de friction (9) et on les compacte sous forme de plots ébauches (12; 120), et on moule d'autre part des poudres métalliques (150) et on les compacte sous forme de ceintures annulaires ébauches (15) de diamètre intérieur égal à 1,005 fois à 1,05 fois le diamètre extérieur desdits plots ébauches (9) ;
(c) on dispose lesdites ceintures annulaires ébauches (15) autour desdits plots ébauches (120) et on les fritte, obtenant des plots ébauches gainés (120 et 15) ;
(d) on dispose ou on a disposé lesdits plots ébauches gainés (120 et 15) sur ladite face d'accrochage (10) dudit support métallique (3), et on les soude à ce support (3) par traitement thermique ;
(e) on forge à plus de 400° C lesdits plots ébauches gainés (120 et 15) en réduisant leurs hauteurs d'au moins 15 %, obtenant ainsi ladite garniture de frein (1; 120,15,3).

2. Procédé selon la revendication 1, dans lequel selon l'étape (b) on moule et on compacte lesdits plots ébauches (12) directement sur la face d'accrochage (10) dudit support métallique (30), le positionnement desdits plots sur ledit support (30) n'étant pas modifié pour les opérations suivantes.

3. Procédé selon l'une quelconque des revendications 1 ou 2, dans lequel on utilise un dit support métallique (30) portant sur sa face d'accrochage (10) des creux (6) de positionnement des plots gainés (2), et dans lequel on prépare selon l'étape (b) chaque plot ébauche (12) avec un téton (13) dépassant de son pied (130), et s'encastrant dans undit creux (6) de positionnement.

4. Procédé selon l'une quelconque des revendications 1 à 3, dans lequel selon l'étape (b) on introduit au moulage une sous-couche (14) de poudre de bronze d'épaisseur moyenne 0,2 à 2mm, pour lesdits plots ébauches (12; 120) et pour lesdites ceintures annulaires ébauches (15).

5. Procédé selon l'une quelconque des revendications 1 ou 2, dans lequel on effectue un frittage desdites ceintures annulaires ébauches (15) après leur compactage selon l'étape (b).

6. Procédé selon l'une quelconque des revendications 1 ou 2, dans lequel on effectue après le forgeage à chaud (e) une compression isostatique à chaud de ladite garniture de frein (1), ladite garniture (1) étant plongée dans un lit de particules réfractaires (20) placées dans un conteneur étanche déformable à chaud (21) fermé sous vide, et ledit conteneur (21) étant soumis à une pression d'au moins 5 MPa et à une température d'au moins 650° C.

7. Procédé selon l'une quelconque des revendications 1 ou 2, dans le cas où les dites poudres de produits de friction (9) et lesdites poudres métalliques (150) contiennent du bronze, lesdites poudres de produits de friction contenant des poudres de graphite et de produits abrasifs et des fondants tels que du plomb ou du verre liés par du bronze, et lesdites poudres métalliques contenant du bronze, de la fonte et 0,4 à 10 % de graphite.

8. Procédé selon la revendication 7 dépendante de la revendication 2, dans lequel on effectue en même temps le frittage et le soudage desdits plots ébauches (120) munis de leurs ceintures annulaires ébauches (15), par un traitement thermique de 10 à 40 min entre 750 et 1000° C sous atmosphère réductrice.

9. Procédé selon l'une quelconque des revendications 1 ou 2, dans le cas où lesdites poudres de produits de friction (9) et lesdites poudres métalliques (150) contiennent du fer, lesdites poudres de produits de friction contenant des poudres de graphite et de produits abrasifs et des fondants tels que du plomb ou du verre liés par du fer, et lesdites poudres métalliques contenant; du fer, de la fonte et 0,4 à 10 % de graphite.

10. Procédé selon la revendication 9 dépendante de la revendication 2, dans lequel on effectue en même temps le frittage et le soudage desdits plots ébauches munis de leurs ceintures annulaires ébauches (2), par un traitement thermique entre 900 et 1150° C sous atmosphère réductrice.

11. Procédé selon la revendication 6, dans lequel on effectue ladite compression isostatique à chaud entre 5 et 25 MPa et à température cmoprise entre 700 et 950° C dans le cas où les plots gainés (2) de ladite garniture (1) sont à base de bronze, à température comprise entre 850 et 1050° C dans le cas où les plots gainés (2) sont à base de fer.

12. Garniture de frein (1; 120,15,3) obtenue par le procédé de l'une quelconque des revendications 1 à 11, comprenant plusieurs plots (5; 120) en produits de friction frittés gainés chacun par une ceinture annulaire métallique frittée (15), lesdits plots gainés (2; 120 et 15) étant non jointifs et fixés par leurs pieds (130) à un support métallique rigide (3; 30), dans laquelle chaque dit plot gainé (2; 120 et 15) est lié par la surface de son pied (130) selon une liaison métallique continue (16).

13. Garniture de frein (1; 120 et 15 et 3) selon la revendication 12, dont lesdits plots gainés (2; 120 et 15) comportent à leur base une couche de bronze fritté (14) d'épaisseur 0,1 à 1,3 mm.

14. Garniture de frein selon l'une quelconque des revendications 12 ou 13, chaque dit plot gainé comprenant à sa base un téton (13) encastré dans un creux (6) dudit support métallique (30), ladite liaison métallique (16) se poursuivant dans cet encastrement (13 et 6).

## Patentansprüche

1. Herstellungsverfahren für einen Bremsbelag (1; 120 und 15 und 3), bei dem mehrere Kerne (2; 120 und 15) aus gesinterten Reibungsmaterialien, welche jeweils von einer gesinterten Metallhülse (4; 15) ummantelt sind, auf einer starren Metallsohle (3,30) befestigt werden, wobei diese ummantelten Kerne (2; 120 und 15) einander nicht berüh- ren, umfassend folgende Schritte:
(a) Man stellt mit Hilfe folgender, aufeinanderfolgender Schritte eine Befestigungsseite (10) dieser Metallunter lage (30) her:
- man entfettet und/oder sandstrahlt eine Seite (10) dieser Unterlage (30) und beschichtet sie in einer organischen Flüssigkeit mit einer Lötschweißpulverlösung (11):
- man entfernt durch Heißoxidation dieser Beschichtung (11) jegliche Kohlenstoffspuren daraus;
- man reduziert die dann gebildeten Oxide durch Wärme- behandlung der so beschichteten Unterlage in reduzieren- der Atmosphäre, wobei die beschichtete Seite (10) dann die besagte Befestigungsseite (10) wird;
(b) man formt zum einen Pulver aus Reibungsmaterialien (9) und verdichtet sie in Form von Rohkernen (12; 120), und man formt zum anderen Metallpulver (150) und verdichtet diese in Form von ringförmigen Rohhülsen (15) mit einem Innendurchmesser gleich dem 1,005- bis 1,05fachen des Außendurchmessers dieser Rohkerne (9);
(c) man ordnet diese ringförmigen Rohhülsen (15) um die genannten Rohkerne (120) an, sintert sie und erhält so ummantelte Rohkerne (120 und 15);
(d) man ordnet die ummantelten Rohkerne (120 und 5) auf der besagten Befestigungsseite (10) der Metallunterlage (3) an bzw. hat diese darauf angeordnet und schweißt sie durch Wärmebehandlung an diese Unterlage (3);
(e) man schmiedet diese ummantelten Rohkerne (120 und 15) gleichzeitig auf über 400 und verringert dabei ihre Höhe um mindestens 15 %, wodurch man den besagten Bremsbelag (1; 120,15,3) erhält.

2. Verfahren nach Anspruch 1, bei dem man gemäß Schritt (b) diese Rohkerne direkt auf der Befestigungsseite (10) der besagten Metallunterlage (30) formt und verdichtet, wobei die Positionierung dieser Kerne auf dieser Unterlage (30) bei den folgenden Arbeitsschritten unverändert bleibt.

3. Verfahren nach Anspruch 1 oder 2, bei dem man eine genannte Metallunterlage (30) benutzt, welche auf ihrer Befestigungsseite (10) Vertiefungen (6) zur Positionie rung der ummantelten Kerne (2) aufweist, und bei dem man gemäß Schritt (b) jeden Rohkern (12) mit einem Zapfen (13) ausstattet, der über seinen Fuß (130) hinaussteht und sich in eine genannte Positionierungsvertiefung (6) fügt.

4. Verfahren nach einem der Ansprüche 1 bis 3, bei dem gemäß Schritt (b) bei der Formgebung eine Unterschicht (14) aus Bronzepulver mittlerer Stärke zwischen 0,2 und 2 mm bei den besagten Rohkernen (12: 120) und den besagten Rohhülsen (15) aufgebracht wird.

5. Verfahren nach Anspruch 1 oder 2, bei dem die genannten Rohhülsen (15) nach ihrer Verdichtung im Schritt (b) gesintert werden.

6. Verfahren nach Anspruch 1 oder 2, bei dem nach dem Warmschmieden (e) ein isostatisches Warmpressen des besagten Bremsbelags (1) stattfindet, wobei der Bremsbelag (1) in ein Bett aus hitzebeständigen Partikeln (20) getaucht wird, welche sich in einem dichten, warmverformbaren, vakuumverschlossenen Behälter (21) befinden, welcher mit einem Druck von mindestens 5 MPa und einer Temperatur von mindestens 650°C beaufschlagt wird.

7. Verfahren nach Anspruch 1 oder 2, für den Fall, daß die Reibungsmaterialpulver (9) und die Metallpulver (150) Bronze enthalten, wobei die besagten Reibungsmaterialpulver Graphitpulver und Schleifmittel und Schmelz- zuschläge wie durch Bronze gebundenes Blei oder Glas und die Metallpulver Bronze, Gußeisen und 0,4 bis 10 % Graphit enthalten.

8. Verfahren nach dem vom Anspruch 2 abhängenden Anspruch 7, bei dem das Sintern und Schweißen der mit ihren Rohhülsen (15) versehenen Rohkerne (120) gleichzeitig in einer 10- bis 40-minütigen Wärmebehandlung auf 750 bis 1000°C in reduzierender Atmosphäre erfolgt.

9. Verfahren nach Anspruch 1 oder 2, für den Fall, daß die Reibungsmaterialpulver (9) und die Metallpulver (150) Eisen enthalten, wobei die genannten Reibungsmaterialpulver Graphitpulver und Schleifmittel und Schmelzzusätze wie durch Eisen gebundenes Blei oder Glas und die Metall- pulver Eisen, Gußeisen und 0,4 bis 10 % Graphit enthalten.

10. Verfahren nach dem vom Anspruch 2 abhängenden Anspruch 9, bei dem Sintern und Schweißen der mit ihren Rohhülsen versehenen Rohkerne (2) gleichzeitig in einer Wärme- behandlung auf 900 bis 1150°C in reduzierender Atmosphäre erfolgt.

11. Verfahren nach Anspruch 6, bei dem das besagte isostatische Warmpressen zwischen 5 und 25 MPa und auf einer Temperatur zwischen 700 und 950°C erfolgt, falls die mit Hülse (1) ummantelten Kerne (2) auf Bronzebasis hergestellt sind, und auf einer Temperatur zwischen 850 und 1050°C, falls die ummantelten Kerne (2) auf Eisenbasis hergestellt sind.

12. Bremsbelag (1; 120,15,3), erhalten durch das Verfahren eines der Ansprüche 1 bis 11, mit mehreren Kernen (5; 120) aus gesinterten Reibungsmaterialien, welche jeweils von einer gesinterten, ringförmigen Hülse (15) ummantelt sind, wobei die ummantelten Kerne (2; 120 und 15) nicht miteinander verbunden sind und mit ihren Füßen (130) an einer starren Metallunterlage (3; 30) befestigt sind, bei dem jeder ummantelte Kern (2; 120 und 15) durch die Fläche seines Fußes (130) entlang einer durchgehenden metallischen Verbindung (16) verbunden ist.

13. Bremsbelag (1; 120 et 15 und 3) nach Anspruch 12, dessen ummantelte Kerne (2; 120 und 15) an ihrer Basis eine Schicht Sinterbronze (14) einer Stärke von 0,1 bis 1,3 mm aufweisen.

14. Bremsbelag nach Anspruch 12 oder 13, wobei jeder ummantelte Kern an seiner Basis einen Zapfen (13) aufweist, welcher sich in eine Vertiefung (6) der genannten Metall- unterlage (30) fügt, wobei die genannte Metallverbindung (16) sich bis in diese Verbindung (13 und 6) fortsetzt.

## Claims

1. A method of manufacturing a brake lining (1; 120 and 15 and 3) wherein a plurality of blocks (2; 120 and 15) of fritted friction products, each of which is encased by a fritted metal annular belt (4; 15) is fixed to rigid metal base plate (3, 30), said encased blocks (2; 120 and 15) not being contiguous, the process comprising the following steps:
(a) a bonding face (10) of said metal support (30) is prepared by way of the following sequence of operations:
- one face (10) of said support (30) is degreased and/or sanded, and is coated with a suspension (11) of solder-brazing powder in an organic liquid;
- all traces of carbon are removed from the coating (11), by hot oxidation of said coating;
- the oxides thus formed are reduced by heat treating the support thus coated in a reducing atmosphere, the clad face (10) thus becoming said bonding face (10);
(b) the friction product powders (9) are moulded, on the one hand, and they are compacted into blocks forming blanks (12; 120), and the metal powders (150) are moulded, on the other hand, and they are compacted into annular belts forming blanks (15) which have an internal diameter of between 1.005 times and 1.05 times the external diameter of said blocks which form blanks (9);
(c) said annular belts forming blanks (15) are arranged around said blocks forming blanks (120) and they are fritted so as to produce encased blocks forming blanks (120 and 15);
(d) said encased blocks forming blanks (120 and 15) are placed, or have been placed, on said bonding face (10) of said metal support (3), and they are soldered to that support (3) by a heat treatment;
(e) said encased blocks (120 and 15) which form blanks are forged at above 400°C, their height is reduced by at least 15% so as to produce said brake lining (1; 120,15,3).

2. A method according to Claim 1, wherein in step (b) said blocks forming blanks (12) are moulded and compacted directly on the bonding face (10) of said metal support (30), positioning of said blocks on said support (30) not being modified for the following operations.

3. A method according to any one of Claims 1 or 2, wherein a said metal support (30) is used which has on its bonding face (10) grooves (6) for the positioning of encased blocks (2), and in which in step (b) each block forming a blank (12) is prepared with a stud (13) which passes beyond its foot (130), and which becomes embedded in a said positioning groove (6).

4. A method according to any one of Claims 1 to 3, wherein in step (b) an underlying layer (14) of bronzing powder which is of an average thickness of 0.2 to 2 mm is introduced into the moulding operation, for said blocks which form blanks (12; 120) and for said annular blanks forming blanks (15).

5. A method according to any one of Claims 1 to 2, wherein fritting of said annular belts forming blanks (15) is effected after they have been compacted in step (b).

6. A method according to any one of Claims 1 or 2, wherein after the hot forging operation (e) said brake lining (1) is subjected to hot isostatic compression, said lining (1) being immersed in a bed of refractory particles (20) which are placed in a sealed container, deformable by heat (21) and closed under vacuum, and said container (21) is placed under a pressure of at least 5 MPa and in a temperature of at least 650°C.

7. A method according to either of Claims 1 or 2, where said friction product powders (9) and said metal powders (150) contain bronze, said friction product powders containing powders of graphite and of abrasive products and of fusing products such as lead or glass which are bonded by bronze, and said metal powders containing bronze, cast iron and between 0.4 and 10% graphite.

8. A method according to Claim 7, dependent on Claim 2, wherein said blocks forming blanks (120) provided with their annular belts (15) forming blanks are subjected simultaneously to fritting and soldering operations in a heat treatment for 10 to 40 mins at between 750 and 1000°C in a reducing atmosphere.

9. A method according to any one of Claims 1 or 2, where said friction product powders (9) and said metal powders (150) contain iron, said friction product powders containing powders of graphite and of abrasive products and of fusing products such as lead or glass bonded by iron, and said metal powders containing iron, cast iron and 0.4 to 10% graphite.

10. A method according to Claim 9 dependent on Claim 2, wherein said blocks forming blanks are subjected simultaneously to fritting and soldering operations which are provided with annular belts forming blanks (2), by a heat treatment of between 900 and 1150°C in a reducing atmosphere.

11. A method according to Claim 6, wherein said hot isostatic compression takes place between 5 and 25 MPa and at a temperature of between 700 and 950°C if the blocks which are encased (2) by said lining (1) have a bronze base, at a temperature of between 850° and 1050°C when the encased blocks (2) have an iron base.

12. A brake lining (1; 120,15,3) obtained by way of the process according to any one of Claims 1 to 11, comprising a plurality of blocks (5; 120) of fritted friction products, each of which is encased by a fritted metal annular belt (15), said non contiguous encased blocks (2; 120 and 15) being joined at the base (130) to a rigid metal support (3; 30), in which each of said encased blocks (2; 120 and 15) is bonded by the surface of its foot (130) along a continuous metal join (16).

13. A brake lining (1; 120 and 15 and 3) according to Claim 12, said encased blocks (2; 120 and 15) of which have a layer of fritted bronze (14) at their base of between 0.1 and 1.3 mm in thickness.

14. A brake lining according to any one of Claims 12 or 13, each of said encased block having a stud (13) at its base which is embedded in a hollowed out region (6) in said metal support (30), said metal join (16) continuing into the groove (13 or 6).
